# EUROPEAN PATENT APPLICATION

(11) **EP 4 836 328 A1**
(43) Date of publication of application: **04.11.2026**
(21) Application number: 23962647.6
(22) Date of filing: 27.12.2023
(51) Int. Cl.: H04L 1/00

(54) **METHOD FOR WIRELESS COMMUNICATION AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: ZHENG, Xufei, Dongguan, Guangdong 523860 (CN)
(74) Representative: Taor, Simon Edward William
(86) International application number: PCT/CN2023/142512
(87) International publication number: WO 2025/137965

(57) **Abstract**

A method for wireless communication and a communication device are provided. The method includes the following. A first device performs signal modulation or signal demodulation according to the first scheme when a usage condition for a first scheme is satisfied. The first scheme is one of multiple schemes for signal modulation or signal demodulation. The multiple schemes are associated with multiple usage conditions, respectively. In the disclosure, the first device performs signal modulation or signal demodulation according to the first scheme in the multiple schemes when the usage condition for the first scheme is satisfied, which helps the first device to select an appropriate signal modulation/demodulation scheme to adapt to different usage conditions.

## Description

### TECHNICAL FIELD

This disclosure relates to the field of communication technology, and in particular, to a method for wireless communication and a communication device.

### BACKGROUND

In a wireless communication system, multiple schemes are available for signal modulation or signal demodulation. However, different schemes are applicable in different scenarios. Therefore, how to select a signal modulation scheme or a signal demodulation scheme to adapt to different scenarios is a problem to be solved.

### SUMMARY

A method for wireless communication and a communication device are provided in the disclosure. Various aspects involved in the disclosure are described below.

In a first aspect, a method for wireless communication is provided. The method includes the following. A first device performs signal modulation or signal demodulation according to the first scheme in response to a usage condition for a first scheme being satisfied. The first scheme is one of multiple schemes for signal modulation or signal demodulation. The multiple schemes are associated with multiple usage conditions, respectively.

In a second aspect, a method for wireless communication is provided. The method includes the following. A first device receives first information sent by a second device. The first information indicates a first scheme. The first device performs signal modulation or signal demodulation according to the first scheme. The first scheme is one of multiple schemes for signal modulation or signal demodulation. The multiple schemes are associated with multiple usage conditions, respectively.

In a third aspect, a communication device is provided. The communication device is a first device. The communication device includes a modulation/demodulation module. The modulation/demodulation module is configured to perform signal modulation or signal demodulation according to a first scheme in response to a usage condition for the first scheme being satisfied. The first scheme is one of multiple schemes for signal modulation or signal demodulation. The multiple schemes are associated with multiple usage conditions, respectively.

In a fourth aspect, a communication device is provided. The communication device is a second device. The communication device includes a receiving module and a modulation/demodulation module. The receiving module is configured to receive first information sent by a first device. The first information indicates a first scheme. The modulation/demodulation module is configured to perform signal modulation or signal demodulation according to the first scheme. The first scheme is one of multiple schemes for signal modulation or signal demodulation. The multiple schemes are associated with multiple usage conditions, respectively.

In a fifth aspect, a communication device is provided. The communication device includes a memory and a processor. The memory is configured to store programs. The processor is configured to invoke the programs stored in the memory to cause the communication device to perform the method in the first aspect.

In a sixth aspect, a communication device is provided. The communication device includes a transceiver, a memory, and a processor. The memory is configured to store programs. The processor is configured to invoke the programs stored in the memory and control the transceiver to receive or send signals, to cause the communication device to perform the method in the second aspect.

In a seventh aspect, an apparatus is provided. The apparatus includes a processor. The processor is configured to invoke programs stored in a memory, to cause the apparatus to perform the method in the first aspect or the second aspect.

In an eighth aspect, a chip is provided. The chip includes a processor. The processor is configured to invoke programs stored in a memory, to cause a device equipped with the chip to perform the method in the first aspect or the second aspect.

In a ninth aspect, a computer-readable storage medium is provided. The computer-readable storage medium is configured to store programs. The programs are operable with a computer to perform the method in the first aspect or the second aspect.

In a tenth aspect, a computer program product is provided. The computer program product includes programs. The programs are operable with a computer to perform the method in the first aspect or the second aspect.

In an eleventh aspect, a computer program is provided. The computer program is operable with a computer to perform the method in the first aspect or the second aspect.

In the disclosure, the first device performs signal modulation or signal demodulation according to the first scheme in the multiple schemes when the usage condition for the first scheme is satisfied, which helps the first device to select an appropriate signal modulation/demodulation scheme to adapt to different usage conditions.

### BRIEF DESCRIPTION OF THE DRAWINGS

FIG. 1 is a schematic structural diagram of a wireless communication system to which embodiments of the disclosure are applicable.
FIG. 2 is a schematic diagram of a 16-quadrature amplitude modulation (QAM) constellation.
FIG. 3 is a schematic diagram illustrating high-dimensional signal modulation/demodulation implemented based on artificial intelligence (AI).
FIG. 4 is a schematic diagram illustrating an effect of phase noise on a 16QAM constellation.
FIG. 5 is a schematic flow chart of a method for wireless communication provided by an embodiment of the disclosure.
FIG. 6A to FIG. 6B are schematic flow charts illustrating methods for wireless communication provided by another embodiment of the disclosure.
FIG. 7A to FIG. 7B are schematic flow charts illustrating methods for wireless communication provided by another embodiment of the disclosure.
FIG. 8A to FIG. 8B are schematic flow charts illustrating methods for wireless communication provided by another embodiment of the disclosure.
FIG. 9A to FIG. 9B are schematic flow charts illustrating methods for wireless communication provided by another embodiment of the disclosure.
FIG. 10 is a schematic structural diagram of a communication device provided by an embodiment of the disclosure.
FIG. 11 is a schematic structural diagram of a communication device provided by another embodiment of the disclosure.
FIG. 12 is a schematic structural diagram of a communication apparatus provided by embodiments of the disclosure.

### DETAILED DESCRIPTION

The technical solutions in the disclosure are described below with reference to the accompanying drawings.

### Communication System Architecture

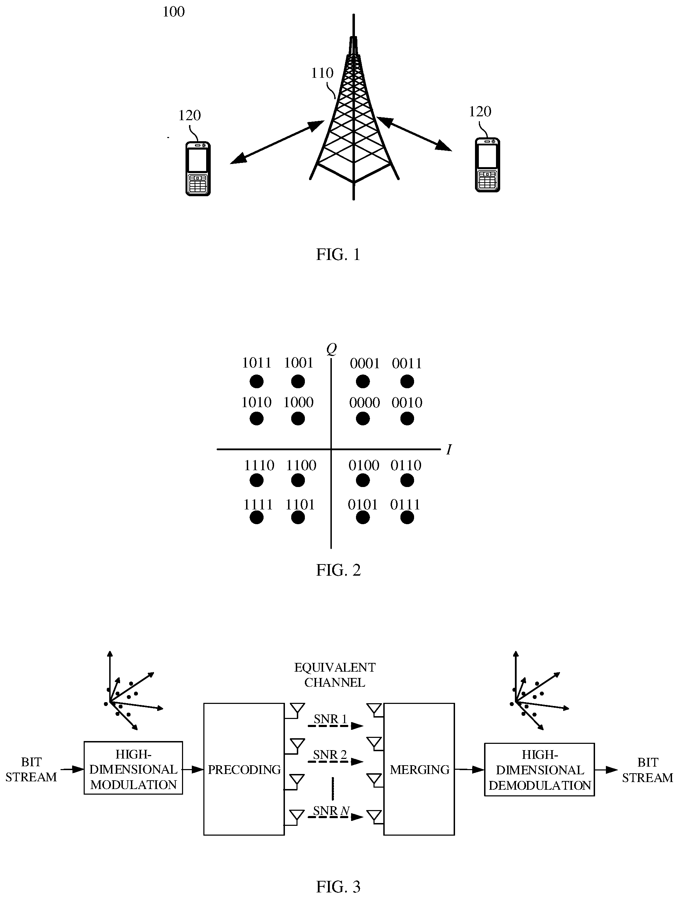

FIG. 1 is a schematic systemic architectural diagram of a wireless communication system 100 to which embodiments of the disclosure are applicable. The wireless communication system 100 may include a network device 110 and a terminal device 120. The network device 110 may be a device that can communicate with the terminal device 120. The network device 110 may provide a communication coverage for a specific geographic region, and may communicate with terminal devices 120 within a coverage region.

FIG. 1 exemplarily illustrates one network device and one terminal device. Optionally, the wireless communication system 100 may include one or more network devices 110 and/or one or more terminal devices 120. For one network device 110, the one or more terminal devices 120 may all be within a network coverage of the network device 110, or may all be located out of the network coverage of the network device 110, or a portion of the one or more terminal devices 120 may be within the coverage of the network device 110 while another portion of the one or more terminal devices 120 may be located out of the network coverage of the network device 110. Embodiments of the disclosure are not limited in this regard.

Optionally, the wireless communication system 100 may further include other network entities such as a network controller, a mobility management entity, etc. Embodiments of the disclosure are not limited in this regard.

It can be understood that, the technical solutions of embodiments of the disclosure are applicable to various communication systems, for example, the 5th generation (5G) system or a new radio (NR) system, a long term evolution (LTE) system, an LTE frequency division duplex (FDD) system, an LTE time division duplex (TDD) system, etc. The technical solutions provided by the disclosure are also applicable to a future communication system, such as the 6th generation (6G) mobile communication system, a satellite communication system, etc.

The terminal device in embodiments of the disclosure may also be referred to as a user equipment (UE), an access terminal, a subscriber unit, a subscriber station, a mobile station, a mobile console (MS), a mobile terminal (MT), a remote station, a remote terminal, a mobile device, a user terminal, a terminal, a wireless communication device, a user agent or a user apparatus. The terminal device in embodiments of the disclosure may be a device that can provide voice and/or data connectivity for a user, and may be configured to connect people, objects, and machines, for example, a handheld device or an in-vehicle device having a wireless connection function, etc. The terminal device in embodiments of the disclosure may be a mobile phone, a tablet computer (pad), a laptop computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the UE may be configured to serve as a base station. For example, the UE may serve as a scheduling entity that can provide sidelink signals between UEs in vehicle-to-everything (V2X) communication or device-to-device (D2D) communication. For example, a cellular phone and a car can communicate with each other through sidelink signals. The cellular phone can communicate with a smart home device without relaying signals via the base station.

The network device in embodiments of the disclosure may be a device that can communicate with the terminal device. The network device may also be referred to as an access network device or a radio access network (RAN) device. For example, the network device may be a base station. The network device in embodiments of the disclosure may refer to an RAN node (or device) through which the terminal device can access a wireless network. The base station may broadly cover various names in the following, or may be replaced with the following names, for example, a NodeB, an evolved NodeB (eNB), a next generation NodeB (gNB), a relay station, an access point, a transmission and receiving point (TRP), a transmitting point (TP), a master station MeNB, a secondary station SeNB, a multi-standard radio (MSR) node, a home NodeB, a network controller, an access node, a radio node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or the like, or a combination thereof. The base station may also refer to a communication module, a modem, or a chip disposed in the foregoing device or apparatus. The base station may also be mobile switching center, a device that can take on a base station function in D2D communication, V2X communication, and machine-to-machine (M2M) communication, a network side device in a 6G network, a device that can take on a base station function in a future communication system, etc. The base station may support networks using the same access technology or different access technologies. A specific technology and a specific device form that are used for the network device are not limited in embodiments of the disclosure.

The base station may be stationary or may be mobile. For example, a helicopter or an unmanned aerial vehicle may be configured to serve as a mobile base station, and one or more cells may move based on a location of the mobile base station. In other examples, the helicopter or the unmanned aerial vehicle may be configured to serve as a device that can communicate with another base station.

In some deployments, the network device in embodiments of the disclosure may refer to a CU or a DU, or the network device includes a CU and a DU. The gNB may further include an AAU.

The network device and the terminal device may be deployed on land, which includes indoor or outdoor, handheld or in-vehicle; may also be deployed on water; and may also be deployed on an airplane, a balloon, and a satellite in the air. Scenarios where the network device and the terminal device are located are not limited in embodiments of the disclosure.

### Conventional Signal Modulation/Demodulation Scheme

Signal modulation is a process of converting information bits generated by a signal source into a form suitable for transmission over a wireless channel, while signal demodulation is an inverse process of signal modulation. In an NR system and an LTE system, commonly used signal modulation schemes may include a phase shift keying (PSK) scheme and a quadrature amplitude modulation (QAM) scheme. Specifically, the above two schemes are both modulation schemes involving joint keying of amplitude and phase. Vector diagrams of the two schemes are often represented by constellations since the vector diagrams resemble constellations. In a wireless communication system, a signal is usually represented by a complex number. For a 16QAM constellation as illustrated in FIG. 2, horizontal and vertical coordinates of the constellation correspond to magnitudes of a real part and an imaginary part of a complex signal, respectively. Both communicating parties need to reach a consensus on the modulation scheme during communication. Currently, there are seven schemes available for modulation/demodulation of various physical layer channels. The seven schemes includes π/2-binary phase shift keying (BPSK) modulation, BPSK modulation, quadrature phase shift keying (QPSK) modulation, 16QAM modulation, 64QAM modulation, 256QAM modulation, and 1024QAM modulation, respectively. Different modulation schemes have different communication efficiencies and different tolerances to noise and interference due to different constellation point densities. For example, compared with 16QAM modulation, a signal under 256QAM modulation can carry more information, but its capability to resist noise is significantly reduced.

### Signal Modulation and Signal Demodulation Based on Artificial Intelligence (AI)

Theoretically, in order to maximize a communication capacity of a wireless communication system, mutual information between a transmit signal (*X*) at a transmitter and a receive signal (*Y*) after passing through a wireless channel needs to be maximized. Since *Y*=*H***X*+*N* (where *H* represents a wireless channel and *N* represents noise), it can be deduced that an optimal modulated signal (*X*) needs to be calculated according to a channel (*H*) through which the optimal modulated signal (*X*) passes to maximize the communication capacity.

However, to balance signal modulation flexibility and an overhead of control/indication signaling, currently available signal modulation schemes are limited (i.e., the above seven schemes). Although a theoretically optimal signal modulation scheme is determined by a channel environment in which signal transmission takes place, channel conditions in a real environment are diverse, and selection only from limited modulation schemes may fail to achieve an optimal matching with the channel environment, such that communication performance is limited.

With the development of AI technology, an AI-based signal modulation scheme helps address the above problem. The AI-based signal modulation scheme aims to enable an AI model to generate a modulation constellation according to specific channel information, such that a communication system can generate a most appropriate signal modulation scheme based on a current actual channel environment, thereby improving communication efficiency. Different from the above conventional modulation schemes, an AI model can flexibly generate a most suitable modulation constellation according to specific channel conditions, that is, implement "customized" signal modulation adapted to a current channel. In addition, by leveraging high flexibility and strong fitting capability of AI technology, the AI-based signal modulation scheme can overcome limitations of transmission layers, treat multiple parallel transmission layers constructed by a multiple-input multiple-output (MIMO) system as a joint high-dimensional space, and perform high-dimensional signal modulation in the space. For example, as illustrated in FIG. 3, AI can jointly treat *N* mutually non-interfering transmission layers constructed by the MIMO system as a 2*N*-dimensional modulation space (with each layer providing two dimensions, *N* layers can be jointly treated as a 2*N*-dimensional space), and perform high-dimensional signal modulation and demodulation in the space.

### Link Adaptation

Channel conditions of wireless communication may vary with changes in a communication environment, which may exhibit significant uncertainty. Theoretically, there is no single signal modulation scheme or precoding manner that can be universally applicable to all channel conditions. However, a link adaptation technology can adaptively adjust transmission parameters of a system according to currently-acquired channel state information (CSI), so as to overcome or adapt to an effect caused by a variation of the current channel. It can be seen from a basic principle of the link adaptation technology that, the link adaptation technology mainly includes two aspects: one is acquisition of channel information (which may often be implemented through CSI feedback), that is, accurate and effective acquisition of current channel environment parameters; and the other is adjustment of transmission parameters.

### Switching of Signal Modulation/Signal Demodulation Schemes

In an NR system and an LTE system, differences among the above seven modulation schemes only lie in different constellation point densities under the same arrangement rule. Therefore, switching among the seven modulation schemes can be achieved only according to a signal to noise ratio (SNR) of a channel/a signal to interference noise ratio (SINR) of a channel (i.e., a channel quality indicator (CQI) in CSI feedback). When the CQI is high, it indicates that channel quality is good, and the transmitter may select a high-order modulation scheme. When the CQI is low, it indicates that channel quality is poor, and the transmitter may select a low-order modulation scheme. Different from a CQI that represents channel energy information in a coarse granularity, a precoding matrix indicator (PMI) represents angle information of a channel in a finer granularity. Different precoding schemes at the transmitter have different requirements on precision of the PMI. When the transmitter can only obtain a low-precision PMI (for example, through Type 1 codebook feedback), the system often adopts a relatively simple precoding scheme (such as single-data-stream transmission/single-transmission-layer transmission). When the transmitter can obtain a high-precision PMI (for example, through Type 2 codebook feedback or enhanced Type 2 codebook feedback), the system often adopts a more complex precoding scheme (such as multi-data-stream transmission/multi-transmission-layer transmission) to improve information transmission efficiency.

According to the above explanation, an advantage of an AI-based signal modulation/demodulation scheme is that a most suitable modulation constellation can be flexibly generated according to specific channel conditions, that is, "customized" signal modulation adapted to the current channel is implemented. Especially when an AI modulation scheme is applicable to a joint high-dimensional modulation space constructed by multiple transmission layers, performance that can be provided may be further significantly improved. However, this also makes the AI-based signal modulation/demodulation scheme to impose higher requirements on precision and real-time performance of channel information, and hardware capabilities of a signal transmitter and a signal receiver. A robustness of the AI-based signal modulation/demodulation scheme is inferior to a robustness of a relatively coarse conventional signal modulation scheme.

On one hand, in a practical communication system, acquisition of a CSI with high precision and high real-time performance usually incurs a certain cost. For example, for a terminal moving at a high speed, a channel for the terminal may change significantly every ten milliseconds or even several milliseconds, such that high-frequency feedback is required to ensure precision of feedback information. If AI signal modulation is performed relying on "outdated" channel information, a mismatch between a modulated signal and an actually-transmitted signal may be caused, and even a failure in performance improvement or a decrease in performance may be caused.

Meanwhile, AI-based high-dimensional signal modulation relies on multiple mutually orthogonal and non-interfering equivalent channels constructed by both the transmitter and the receiver through MIMO to carry multiple data streams/multiple transmission layers. Only when the transmitter can obtain a high-precision PMI, it can be ensured that the constructed data streams/transmission layers can be mutually orthogonal; otherwise, inter-stream interference may be generated. Transmission of a high-dimensional modulated signal in the presence of the inter-stream interference may lead to more frequent errors at a demodulation end, such that a symbol error rate (SER) is increased.

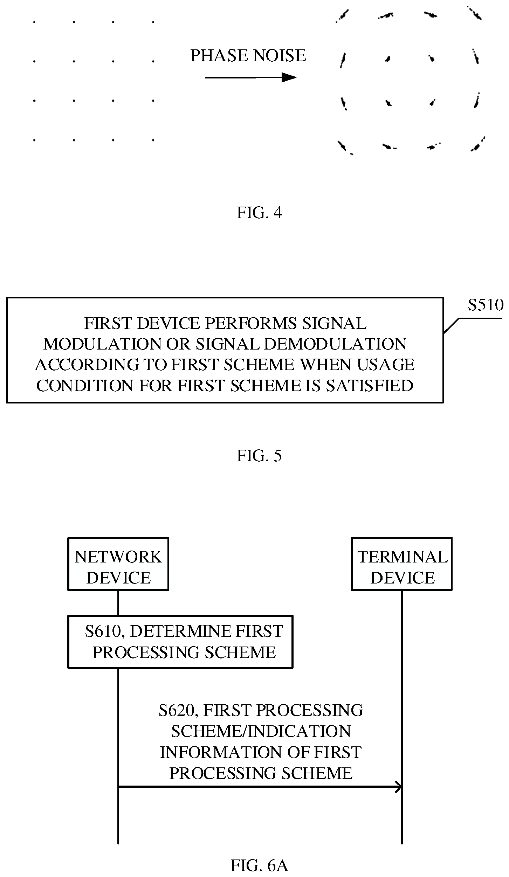

On the other hand, a higher-precision modulation scheme also imposes higher requirements on hardware of the transmitter and receiver. For example, a conventional modulation constellation is generally presented as a regular rectangle (with reference to FIG. 2), which is not optimal but is easier for modulation and demodulation hardware to process. In addition, non-ideality of radio frequency (RF) hardware may additionally introduce noise and non-linear distortion to signals. As a frequency band used and a required bandwidth continue to increase in wireless communication, signal distortion caused by non-ideality of RF becomes increasingly non-negligible. Common factors that adversely affect a modulated signal include power amplifier (PA) non-linear distortion, in-phase/quadrature (I/Q) imbalance, phase noise, etc. For example, FIG. 4 illustrates an effect of phase noise on a 16QAM modulation constellation. However, a higher-precision signal modulation scheme has weaker resistance to such distortion.

To sum up, the AI-based signal modulation/demodulation scheme is not always an optimal signal modulation/demodulation scheme. In some cases where the AI-based signal modulation/demodulation scheme is not suitable, a conventional signal modulation/demodulation scheme may be selected. However, with introduction of the AI modulation scheme, the dependence on precision and timeliness of channel information is significantly increased. As a result, a more complex mechanism needs to be introduced to implement switching between an AI modulation scheme and a conventional modulation scheme as well as between different AI modulation schemes. Therefore, how to select a signal modulation scheme or a signal demodulation scheme to adapt to different scenarios is a problem to be solved.

Based on this, with reference to FIG. 5, a method for wireless communication provided by embodiments of the disclosure is introduced in detail below. The method illustrated in FIG. 5 is applicable to any of the above terminal devices and/or network devices. For ease of understanding, a first device and a second device are used below to represent devices to which the method is applicable. In embodiments of the disclosure, the first device may be a terminal device, and the second device may be a network device. Alternatively, in embodiments of the disclosure, the first device may be a network device, and the second device may be a terminal device. The method illustrated in FIG. 5 may be applied to uplink transmission, that is, a signal transmitter is a terminal device. The method illustrated in FIG. 5 may also be applied to downlink transmission, that is, a signal transmitter is a network device.

As illustrated in FIG. 5, the method provided by embodiments of the disclosure may include step S510. In step S510, a first device performs signal modulation or signal demodulation according to a first scheme when a usage condition for the first scheme is satisfied. The first scheme is one of multiple schemes for signal modulation or signal demodulation, and the multiple schemes are associated with multiple usage conditions, respectively. Different first schemes have different usage conditions, that is, there may be a mapping relationship(s) or an association relationship(s) between the first scheme(s) and the usage condition(s). Exemplarily, a mapping relationship between the first schemes and the usage conditions may be a one-to-one mapping relationship, that is, one first scheme corresponds to one usage condition. Alternatively, a mapping relationship between the first schemes and the usage conditions may be a one-to-many mapping relationship, that is, one first scheme corresponds to multiple usage conditions.

The first scheme may include one or more of: a model-based signal modulation scheme, such as an AI-based signal modulation scheme; a signal modulation scheme based on a predefined modulation constellation, where the predefined modulation constellation may refer to a modulation constellation generated by the above conventional signal modulation/demodulation schemes; or a modulation constellation generated based on a model, such as a modulation constellation generated based on AI. The model-based signal modulation scheme may include one or more of: a model-based first signal modulation scheme or a model-based second signal modulation scheme. The first signal modulation scheme may be used to modulate data on a single transmission layer. The first signal modulation scheme is two-dimensional. The model-based second signal modulation scheme may be used to jointly modulate data streams on multiple transmission layers. The second signal modulation scheme is 2*N*-dimensional, and *N* is equal to a quantity (the number) of the multiple transmission layers. For ease of understanding, the second signal modulation scheme may also be referred to as a high-dimensional modulation scheme.

In the disclosure, the first device performs signal modulation or signal demodulation according to the first scheme in the multiple schemes when the usage condition for the first scheme is satisfied, which helps the first device to select an appropriate signal modulation/demodulation scheme to adapt to different usage conditions.

With reference to Table 1 to Table 8, the usage condition for the first scheme (hereinafter referred to as a "first condition") is introduced in detail below. Exemplarily, Arabic numerals may be used in the following tables to represent identifiers of the first schemes to distinguish different first schemes. Certainly, the identifiers of the first schemes may also be in other forms, and the disclosure is not limited in this regard.

The usage condition for the first scheme may be associated with one or more of the following information (hereinafter referred to as "condition information"): a moving speed of a terminal device, channel measurement information, CSI feedback-related information, channel energy, channel quality, an operating frequency band, an operating bandwidth, phase noise-related information, a type of a PA, or a capability of the terminal device. It is worth noted that, when the first device is a terminal device, the terminal device herein is the first device; and when the first device is a network device, the terminal device herein is a terminal device that communicates with the first device. A channel may refer to an uplink channel or a downlink channel between the first device and the second device. The operating frequency band/operating bandwidth may refer to an operating frequency band/operating bandwidth of the first device and/or the second device. A phase noise may refer to a phase noise of an RF component of the first device and/or the second device. The PA may refer to a PA of the first device and/or the second device.

The usage condition for the first scheme may be associated with the moving speed of the terminal device, and the moving speed of the terminal device has a certain effect on performance of a signal modulation/demodulation scheme. For example, when the terminal device moves at a high speed, a channel between the network device and the terminal device may change rapidly due to factors such as a Doppler effect and the like. In this case, for an AI-based signal modulation scheme, a modulation constellation generated through the AI-based signal modulation scheme according to specific channel information may be "mismatched" with a channel actually used for transmission due to a difference caused by a variation of the channel, which may result in performance loss. On the contrary, the above problem does not occur in a scenario where the moving speed is relatively low. Therefore, different first schemes may be selected for signal modulation or signal demodulation according to different moving speeds of the terminal device. For example, as illustrated in Table 1, there may be mapping relationships between first schemes and moving speed ranges of the terminal device. Different moving speed ranges of the terminal device may correspond to different first schemes. When the terminal device moves at a speed in a low-moving speed range, an AI-based signal modulation scheme may be adopted; and when the terminal device moves at a speed in a high-moving speed range, a conventional signal modulation scheme may be adopted. Further, for an AI-based signal modulation scheme, a high-dimensional modulation scheme or a two-dimensional modulation scheme may also be selected according to different moving speed ranges of the terminal device. For example, the moving speeds of the terminal device may be divided into a low-speed range, a medium-speed range, and a high-speed range. An AI-based high-dimensional modulation scheme may be selected when the terminal device moves at a speed in the low-speed range, an AI-based two-dimensional modulation scheme may be selected when the terminal moves at a speed in the medium-speed range, and a conventional modulation scheme may be selected when the terminal moves at a speed in the high-speed range. The first scheme is determined based on the moving speed of the terminal device, which helps to avoid an effect of the moving speed of the terminal device on signal modulation/demodulation.

**Table 1**

| identifier | first condition | first scheme |
|---|---|---|
| 1 | moving speed range *A* of the terminal device | processing scheme *A* |
| 2 | moving speed range *B* of the terminal device | processing scheme *B* |
| 3 | more moving speed ranges | more corresponding processing schemes |

The usage condition for the first scheme may be associated with the channel measurement information, and accuracy of channel measurement has a certain effect on the performance of a signal modulation/demodulation scheme. For example, for an AI-based modulation scheme, when channel measurement is inaccurate and incurs a large error, a modulation constellation generated through the AI-based modulation scheme according to channel measurement information may be degraded. Therefore, different first schemes may be selected for signal modulation or signal demodulation according to different levels of accuracy of channel measurement. Further, in a communication system, channel measurement may be achieved through a reference signal. For example, a reference signal such as a channel state information-reference signal (CSI-RS) and a demodulation reference signal (DMRS) sent by the network may be used by the terminal device to measure a downlink channel, and a reference signal such as a DMRS and a sounding reference signal (SRS) sent by the terminal device may be used by the network device to measure an uplink channel. Therefore, the accuracy of channel measurement has a certain relationship with a configuration of a reference signal (such as a time-frequency density, a transmission periodicity, a coverage bandwidth, etc.). Therefore, the channel measurement information may include configuration information of a reference signal for channel measurement. The configuration information of a reference signal for channel measurement may include a signal (or "pilot") configuration type or a pilot configuration set. For example, as illustrated in Table 2, there may be mapping relationships between first schemes and pilot configuration types for channel measurement or pilot configuration sets for channel measurement. Different pilot configuration types for channel measurement or pilot configuration sets for channel measurement may correspond to different first schemes. The first scheme is determined based on the accuracy of channel measurement, which helps to avoid an effect of the accuracy of channel measurement on signal modulation/demodulation.

**Table 2**

| identifier | first condition | first scheme |
|---|---|---|
| 4 | pilot configuration type for channel measurement or pilot configuration set *C* for channel measurement | processing scheme *C* |
| 5 | pilot configuration type for channel measurement or pilot configuration set *D* for channel measurement | processing scheme *D* |
| 6 | more pilot configuration types for channel measurement or more sets for channel measurement | more corresponding processing schemes |

The usage condition for the first scheme may be associated with the CSI feedback-related information, and accuracy of CSI feedback has a certain effect on the performance of a signal modulation/demodulation scheme. For example, an AI-based high-dimensional modulation scheme relies on multiple mutually orthogonal and non-interfering equivalent channels constructed by both the transmitter and receiver through MIMO to carry multiple parallel data streams/parallel transmission layers. Only when the transmitter can obtain a high-precision CSI, it can be ensured that the constructed data streams/transmission layers can be mutually orthogonal; otherwise, inter-stream interference may be generated. Transmission of a high-dimensional modulated signal in the presence of the inter-stream interference may lead to more frequent errors at a demodulation end, such that an SER is increased. Therefore, different first schemes may be selected for signal modulation or signal demodulation according to different levels of accuracy of CSI feedback. Further, a main factor that determines the accuracy of CSI feedback is a CSI feedback-related configuration (such as a feedback method, a feedback periodicity, etc.) of a communication system. For example, a Type 1 codebook-based feedback can ensure relatively low precision, an enhanced Type 2 codebook-based feedback can ensure relatively high precision, and an AI-based CSI feedback scheme can provide even higher precision. Therefore, the CSI feedback-related information may include configuration information for CSI feedback. The configuration information for CSI feedback may include information such as a CSI feedback manner (or method) and a CSI feedback periodicity. For example, as illustrated in Table 3, there may be mapping relationships between first schemes and CSI feedback methods and/or CSI feedback configuration sets. Different CSI feedback methods and/or different CSI feedback configuration sets may correspond to different first schemes. The first scheme is determined based on the accuracy of CSI feedback, which helps to avoid an effect of the accuracy of CSI feedback on signal modulation/demodulation.

**Table 3**

| identifier | first condition | first scheme |
|---|---|---|
| 7 | CSI feedback method and/or CSI feedback configuration set *E* | processing scheme *E* |
| 8 | CSI feedback method and/or CSI feedback configuration set *F* | processing scheme *F* |
| 9 | more CSI feedback methods and/or more CSI feedback configuration sets | more corresponding processing schemes |

The usage condition for the first scheme may be associated with the channel energy, and the channel energy has a certain effect on the performance of a signal modulation/demodulation scheme. Therefore, different first schemes may be selected for signal modulation or signal demodulation according to different channel energy. There may be mapping relationships between first schemes and channel energy ranges. Different channel energy ranges may correspond to different first schemes. The first scheme is determined based on the channel energy, which helps to avoid an effect of the channel energy on signal modulation/demodulation.

The usage condition for the first scheme may be associated with the channel quality, and the channel quality has a certain effect on the performance of a signal modulation/demodulation scheme. For example, under different channel quality, a degree to which a modulated signal is affected by noise or interference varies. Therefore, different first schemes may be selected for signal modulation or signal demodulation according to different channel quality. For example, as illustrated in Table 4, there may be mapping relationships between first schemes and channel quality ranges. Different channel quality ranges may correspond to different first schemes. Further, metrics commonly used to represent channel quality in a communication system may include reference signal received power (RSRP), reference signal received quality (RSRQ), receive signal strength indicator (RSSI), signal to interference noise ratio (SINR), signal to noise ratio (SNR), CQI, etc. Therefore, a channel quality range may be determined according to a metric representing the channel quality. The first scheme is determined based on the channel quality, which helps to avoid an effect of the channel quality on signal modulation/demodulation.

**Table 4**

| identifier | first condition | first scheme |
|---|---|---|
| 10 | channel quality range *G* | processing scheme *G* |
| 11 | channel quality range *H* | processing scheme *H* |
| 12 | more channel quality ranges | more corresponding processing schemes |

The usage condition for the first scheme may be associated with the operating frequency band/operating bandwidth, and the operating frequency band/operating bandwidth has a certain effect on the performance of a signal modulation/demodulation scheme. For example, across different frequency bands or different bandwidths, an RF hardware portion may introduce different levels of noise or distortion to a signal. For example, for communication devices operating in a high frequency band, a deviation between crystal oscillators of both communicating parties may cause severe phase noise, which may affect performance of modulation and demodulation. Therefore, different first schemes may be selected for signal modulation or signal demodulation according to different operating frequency bands/different operating bandwidths. For example, as illustrated in Table 5, there may be mapping relationships between first schemes and frequency band/bandwidth types or frequency band/bandwidth type sets. Different frequency band/bandwidth types or frequency band/bandwidth type sets may correspond to different first schemes. The first scheme is determined based on the operating frequency band/operating bandwidth, which helps to avoid an effect of the operating frequency band/operating bandwidth on signal modulation/demodulation.

**Table 5**

| identifier | first condition | first scheme |
|---|---|---|
| 13 | frequency band/bandwidth type, or frequency band/bandwidth type set *I* | processing scheme *I* |
| 14 | frequency band/bandwidth type, or frequency band/bandwidth type set *J* | processing scheme *J* |
| 15 | more frequency band/bandwidth types, or more frequency band/bandwidth type sets | more corresponding processing schemes |

The usage condition for the first scheme may be associated with the phase noise-related information, and the phase noise has a certain effect on the performance of a signal modulation/demodulation scheme. As illustrated in FIG. 4, phase noise may have a significant adverse effect on modulated signals, especially for signals in a high frequency band or even an ultra-high frequency band. Therefore, different first schemes may be selected for signal modulation or signal demodulation according to different phase noise resistance capabilities of communication systems. Further, a phase tracking reference signal (PTRS) may be used for phase noise measurement or compensation in a communication system. A phase noise compensation effect is closely related to a PTR-related configuration, such as a time-frequency density, a transmission periodicity, an occupied bandwidth, etc. Therefore, the phase noise-related information may include configuration information of a PTRS. For example, as illustrated in Table 6, there may be mapping relationships between first schemes and phase tracking pilot configuration sets. Different phase tracking pilot configuration sets may correspond to different first schemes. The first scheme is determined based on the phase noise, which helps to avoid an effect of phase noise on signal modulation/demodulation.

**Table 6**

| identifier | first condition | first scheme |
|---|---|---|
| 16 | phase tracking pilot configuration set *K* | processing scheme *K* |
| 17 | phase tracking pilot configuration set *L* | processing scheme *L* |
| 18 | more phase tracking pilot configuration sets | more corresponding processing schemes |

The usage condition for the first scheme may be associated with the type of a PA, and the PA has a certain effect on the performance of a signal modulation/demodulation scheme. For example, different PAs (such as PAs of different models or types) have different operating characteristics (such as linear ranges), such that degrees of non-linear distortion introduced to a modulated signal by different PAs are different. Therefore, different first schemes may be selected for signal modulation or signal demodulation according to different models or types of PAs. For example, as illustrated in Table 7, there may be mapping relationships between first schemes and PA models/types or PA model/type sets. Different PA models/types or different PA model/type sets may correspond to different first schemes. The first scheme is determined based on the PA, which helps to avoid an effect of the PA on signal modulation/demodulation.

**Table 7**

| identifier | first condition | first scheme |
|---|---|---|
| 19 | PA model, type or PA model, type set *M* | processing scheme *M* |
| 20 | PA model, type or PA model, type set *N* | processing scheme *N* |
| 21 | more PA models, types or more PA model, type sets | more corresponding processing schemes |

The usage condition for the first scheme may be associated with the capability of the terminal device, and the capability of the terminal device has a certain effect on the performance of the signal modulation/demodulation scheme. A conventional modulation constellation is generally presented as a regular square (with reference to FIG. 2), which is not optimal but is easier for modulation and demodulation hardware to process. Although an AI-based modulation constellation can provide higher flexibility, the AI-based modulation constellation may have a more complex density and distribution of constellation points, thereby imposing higher requirements on hardware of the transmitter and the receiver. Therefore, different first schemes may be selected according to different capabilities of the terminal device. Further, the capability of the terminal device may be determined according to capability information of the terminal device. The capability information of the terminal device may include a UE capability category, and terminal devices of different UE capability categories have different limitations on supported modulation accuracy and the number of the transmission layers, which may lead to different effects on AI-based two-dimensional modulation or even higher-dimensional modulation. Therefore, as illustrated in Table 8, there may be mapping relationships between first schemes and UE categories. Different UE categories may correspond to different first schemes. The first scheme is determined based on the capability of the terminal device, which helps to avoid an effect of the capability of the terminal device on signal modulation/demodulation.

**Table 8**

| identifier | first condition | first scheme |
|---|---|---|
| 22 | UE category *O* | processing scheme *O* |
| 23 | UE category *P* | processing scheme *P* |
| 24 | more UE categories | more corresponding processing schemes |

The usage condition for the first scheme may also be associated with multiple types of the above information. For example, the usage condition for the first scheme may be associated with the moving speed of the terminal device and the CSI feedback-related information. For another example, the usage condition for the first scheme may be associated with the operating frequency band/operating bandwidth and the phase noise. When the usage condition is determined based on the above information, effects of different operating scenarios and usage conditions on signal modulation/demodulation may be considered, which helps to ensure that a most appropriate modulation/demodulation scheme can be selected under different scenarios, such that communication efficiency and reliability can be balanced.

In some implementations, the method illustrated in FIG. 5 may further include step S520. In step S520, the first device sends first information to the second device. The first information may indicate the first scheme. That is, the first device may indicate the first scheme to the second device, which helps the second device to perform switching of signal modulation schemes or signal demodulation schemes.

Further, the first information may include one or more of: an identifier of the first scheme, or the first scheme. The identifier of the first scheme may include an identifier of the first scheme itself or an identifier of a first model (a model for signal modulation or signal demodulation). Alternatively, the identifier of the first scheme may include an identifier(s) of an association relationship(s) between the first scheme(s) and the first condition(s). The first scheme may include a modulation constellation or the first model, and the modulation constellation may refer to a modulation constellation corresponding to the above conventional modulation scheme or a modulation constellation corresponding to the first model. The first information may be sent through a broadcast channel, radio resource control (RRC), a medium access control (MAC) control element (CE), a physical downlink control channel (PDCCH), a physical downlink shared channel (PDSCH), a physical uplink control channel (PUCCH), a physical uplink shared channel (PUSCH), etc.

In some implementations, before step S510, the method illustrated in FIG. 5 may further include step S500. In step S500, the first device receives second information sent by the second device. The second information may be used by the first device to determine the first scheme. That is, the second device may provide the second information to the first device, which helps the first device to determine the first scheme.

Further, the second information may indicate one or more of: information for determining a portion of or all of the multiple usage conditions (hereinafter referred to as "a portion of or all condition information"), or association relationships between the portion of or all of the multiple usage conditions and a portion of or all of the multiple schemes (hereinafter referred to as "a portion of or all association relationships"). The portion of or all condition information may include information that the first device cannot obtain, such as a moving speed of the second device, a category of the second device, a type of a PA of the second device, a configuration of a reference signal for the second device, etc. The portion of or all association relationships may include an association relationship(s) undefined by a protocol or an association relationship(s) unable to be determined by the first device itself. The second information may be sent through a broadcasted message, an RRC, a MAC CE, a PUCCH, a PUSCH, a PDCCH, a PDSCH, etc.

In some implementations, the association relationships between first conditions and first schemes mentioned above may be predefined by a protocol and/or determined by the first device itself. For example, all the association relationships between first conditions and first schemes mentioned above may be predefined by a protocol. For another example, all the association relationships between first conditions and first schemes mentioned above may be determined by the first device itself. For another example, a portion of the association relationships between first conditions and first schemes mentioned above may be predefined by a protocol, and another portion of the association relationships between first conditions and first schemes mentioned above may be determined by the first device itself.

In other implementations, the association relationships between first conditions and first schemes may be provided by the second device. For example, all the association relationships between first conditions and first schemes may be provided by the second device. For another example, a portion of the association relationships between first conditions and first schemes may be provided by the second device.

The method for wireless communication according to embodiments of the disclosure is exemplarily illustrated below with reference to Embodiment 1 to Embodiment 4. It is worth noted that in the following explanation, the first scheme may be a first processing scheme.

### Embodiment 1

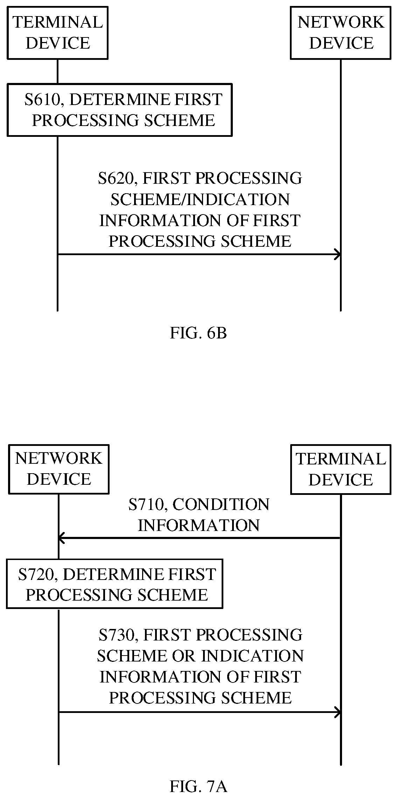

In Embodiment 1, for example, all association relationships between first conditions and first processing schemes are predefined by a protocol and/or determined by the first device itself, and the first device can obtain all condition information. As illustrated in FIG. 6, the method in Embodiment 1 may include steps S610 to S620.

As illustrated in FIG. 6A, the first device is a network device, and the second device is a terminal device. With reference to FIG. 6A, in step S610, the network device determines a first processing scheme. The network device may determine the first processing scheme according to a usage condition and an association relationship. In step S620, the network device sends the first processing scheme or indication information of the first processing scheme to the terminal device.

As illustrated in FIG. 6B, the first device is a terminal device, and the second device is a network device. With reference to FIG. 6B, in step S610, the terminal device determines a first processing scheme. The terminal device may determine the first processing scheme according to a usage condition and an association relationship. In step S620, the terminal device sends the first processing scheme or indication information of the first processing scheme to the network device.

Based on the method in Embodiment 1, the first device may determine first scheme according to the usage condition and the association relationships between usage conditions and first schemes, which helps a signal modulation/demodulation scheme to adapt to different scenarios. After determining the first processing scheme, the first device may indicate the first processing scheme to the second device, which helps the second device to perform switching of signal modulation schemes or signal demodulation schemes.

### Embodiment 2

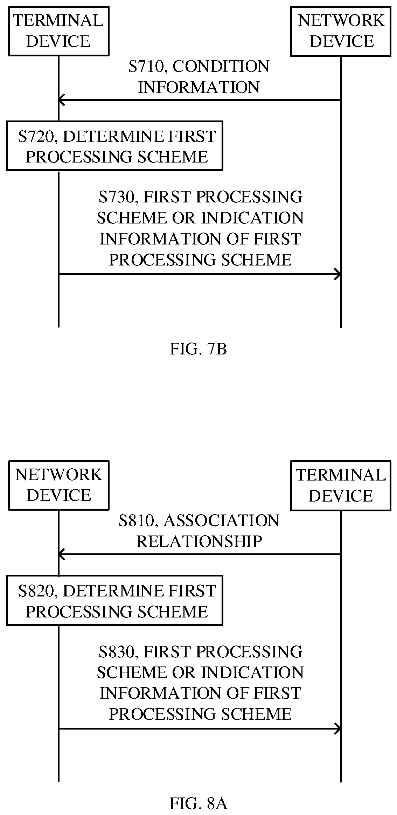

In Embodiment 2, for example, all association relationships between first conditions and first processing schemes are predefined by a protocol and/or determined by a first device itself, but the first device cannot obtain a portion of or all condition information. In this case, the condition information may be provided by a second device. The second device may provide all or a portion of the condition information, and a remaining portion of the condition information is predefined by a protocol or determined by the first device itself. As illustrated in FIG. 7, the method in Embodiment 2 may include steps S710 to S730.

As illustrated in FIG. 7A, the first device is a network device, and the second device is a terminal device. With reference to FIG. 7A, in step S710, the terminal device reports condition information to the network device. The condition information reported by the terminal device may include a moving speed of the terminal device, a model of a PA of the terminal device, a category of the terminal device, etc. In step S720, the network device determines a first processing scheme. After obtaining the condition information, the network device may determine the first processing scheme according to a usage condition and an association relationship. In step S730, the network device sends the first processing scheme or indication information of the first processing scheme to the terminal device.

As illustrated in FIG. 7B, the first device is a terminal device, and the second device is a network device. With reference to FIG. 7B, in step S710, the network device delivers condition information to the terminal device. The condition information delivered by the network device may include a type of a PA of the network device, configuration information of a reference signal, etc. In step S720, the terminal device determines a first processing scheme. After obtaining the condition information, the terminal device may determine the first processing scheme according to a usage condition and an association relationship. In step S730, the terminal device sends the first processing scheme or indication information of the first processing scheme to the network device.

Based on the method in Embodiment 2, the second device may send condition information to the first device to facilitate the first device to determine the first processing scheme. The first device may determine the first scheme according to the usage condition and the association relationships between usage conditions and first schemes, which helps a signal modulation/demodulation scheme to adapt to different scenarios. The first device may indicate the first processing scheme to the second device, which helps the second device to perform switching of signal modulation schemes or signal demodulation schemes.

### Embodiment 3

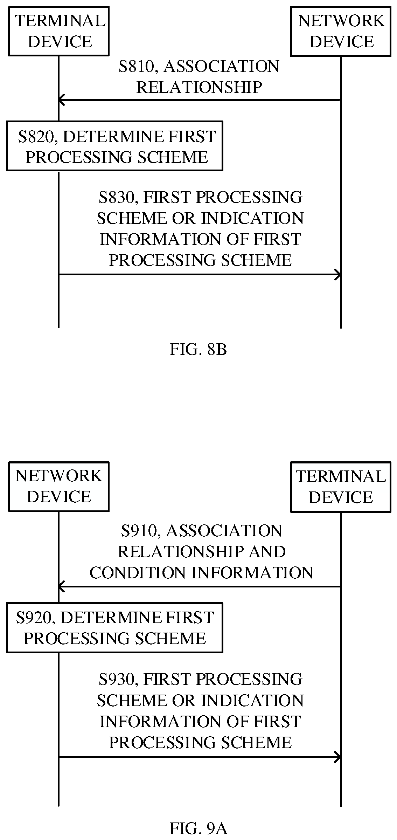

In Embodiment 3, for example, a first device cannot obtain a portion of or all association relationships between first conditions and first processing schemes, but the first device can obtain all condition information. In this case, the association relationships between first conditions and first processing schemes may be provided by a second device. The second device may provide all or a portion of the association relationships, and a remaining portion of the association relationships is predefined by a protocol or determined by the first device itself. As illustrated in FIG. 8, the method in Embodiment 3 may include steps S810 to S830.

As illustrated in FIG. 8A, the first device is a network device, and the second device is a terminal device. With reference to FIG. 8A, in step S810, the terminal device reports an association relationship to the network device. In step S820, the network device determines a first processing scheme. After obtaining the association relationship, the network device may determine the first processing scheme according to the association relationship and a usage condition. In step S830, the network device sends the first processing scheme or indication information of the first processing scheme to the terminal device. The indication information of the first processing scheme may include an identifier of the association relationship, that is, the network device may indirectly indicate the first processing scheme to the terminal device through the identifier of the association relationship.

As illustrated in FIG. 8B, the first device is a terminal device, and the second device is a network device. With reference to FIG. 8B, in step S810, the network device delivers an association relationship to the terminal device. In step S820, the terminal device determines a first processing scheme. After obtaining the association relationship, the terminal device may determine the first processing scheme according to the association relationship and a usage condition. In step S830, the terminal device sends the first processing scheme or indication information of the first processing scheme to the network device. The indication information of the first processing scheme may include an identifier of the association relationship, that is, the terminal device may indirectly indicate the first processing scheme to the network device through the identifier of the association relationship.

Based on the method in Embodiment 3, the second device may send an association relationship to the first device to facilitate the first device to determine the first processing scheme. The first device may determine the first scheme according to the usage condition and the association relationships between usages condition and first schemes, which helps a signal modulation/demodulation scheme to adapt to different scenarios. The first device may indicate the first processing scheme to the second device, which helps the second device to perform switching of signal modulation schemes or signal demodulation schemes.

### Embodiment 4

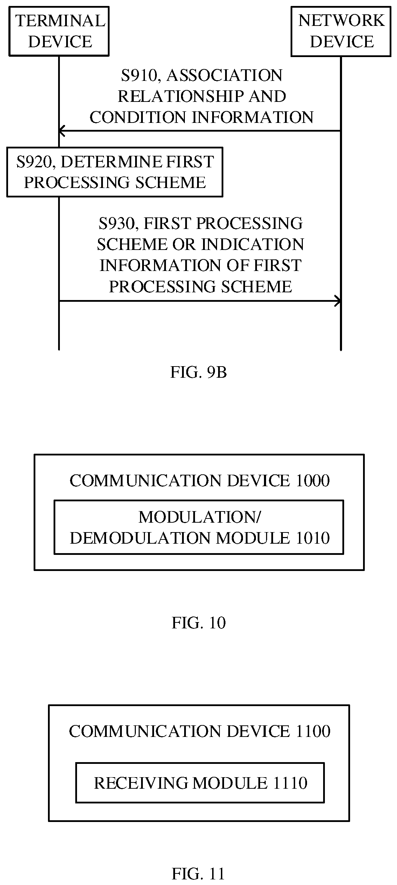

In Embodiment 4, for example, a first device cannot obtain a portion of or all association relationships between first conditions and first processing schemes, and the first device cannot obtain a portion of or all condition information. In this case, an association relationship between a first condition and a first processing scheme may be provided by a second device. The second device may provide all or a portion of the association relationships, and a remaining portion of the association relationships is predefined by a protocol or determined by the first device itself. In addition, the condition information may also be provided by the second device. That is, in addition to providing an association relationship(s), the second device may also provide or continuously update the condition information that the first device cannot obtain, so as to facilitate decision-making by the first device. The second device may provide all or a portion of the condition information, and a remaining portion of the condition information is predefined by a protocol or determined by the first device itself. As illustrated in FIG. 9, the method in Embodiment 4 may include steps S910 to S930.

As illustrated in FIG. 9A, the first device is a network device, and the second device is a terminal device. With reference to FIG. 9A, in step S910, the terminal device reports an association relationship and condition information to the network device. The condition information reported by the terminal device may include a moving speed of the terminal device, a model of PA of the terminal device, a category of the terminal device, etc. In step S920, the network device determines a first processing scheme. After obtaining the association relationship and the condition information, the network device may determine the first processing scheme according to the association relationship and a usage condition. In step S930, the network device sends the first processing scheme or indication information of the first processing scheme to the terminal device.

As illustrated in FIG. 9B, the first device is a terminal device, and the second device is a network device. With reference to FIG. 9B, in step S910, the network device delivers an association relationship and condition information to the terminal device. The condition information delivered by the network device may include a type of a PA of the network device, configuration information of a reference signal, etc. After obtaining the association relationship and the condition information, the terminal device may determine a first processing scheme according to the association relationship and a usage condition. In step S920, the terminal device determines the first processing scheme. In step S930, the terminal device sends the first processing scheme or indication information of the first processing scheme to the network device.

Based on the method in Embodiment 4, the second device may send an association relationship and condition information to the first device to facilitate the first device to determine the first processing scheme. The first device may determine the first scheme according to the usage condition and the association relationships between usage conditions and first schemes, which helps a signal modulation/demodulation scheme to adapt to different scenarios. The first device may indicate the first processing scheme to the second device, which helps the second device to perform switching of signal modulation schemes or signal demodulation schemes.

The method embodiments of the disclosure are explained in detail above with reference to FIG. 1 to FIG. 9, and apparatus embodiments of the disclosure are described in detail below with reference to FIG. 10 to FIG. 12. It can be understood that, explanations of the method embodiments correspond to explanations of the apparatus embodiments, such that for parts not explained in detail, reference may be made to the above method embodiments.

FIG. 10 is a schematic structural diagram of a communication device provided by an embodiment of the disclosure. A communication device 1000 illustrated in FIG. 10 is a first device. The communication device 1000 may include a modulation/demodulation module 1010. The modulation/demodulation module 1010 is configured to perform signal modulation or signal demodulation according to a first scheme when a usage condition for the first scheme is satisfied. The first scheme is one of multiple schemes for signal modulation or signal demodulation. The multiple schemes are associated with multiple usage conditions, respectively.

In some implementations, the usage condition for the first scheme is associated with one or more of the following information: a moving speed of a terminal device, channel measurement information, CSI feedback-related information, channel energy, channel quality, an operating frequency band, an operating bandwidth, phase noise-related information, a type of a PA, or a capability of the terminal device.

In some implementations, the channel measurement information includes configuration information of a reference signal for channel measurement.

In some implementations, the CSI feedback-related information includes configuration information for CSI feedback.

In some implementations, the phase noise-related information includes configuration information of a PTRS.

In some implementations, the communication device further includes a sending module. The sending module is configured to send first information to a second device. The first information indicates the first scheme.

In some implementations, the first information includes one or more of: an identifier of the first scheme, or the first scheme.

In some implementations, the communication device further includes a receiving module 1020. The receiving module 1020 is configured to receive second information sent by the second device. The second information is used by the first device to determine the first scheme.

In some implementations, the second information indicates one or more of: information for determining a portion of or all of the multiple usage conditions, or association relationships between a portion of or all of the multiple usage conditions and a portion of or all of the multiple schemes.

In some implementations, the first scheme includes one or more of: a model-based signal modulation scheme, a signal modulation scheme based on a predefined modulation constellation, or a modulation constellation generated based on a model.

In some implementations, the model-based signal modulation scheme includes one or more of: a model-based first signal modulation scheme, or a model-based second signal modulation scheme. The first signal modulation scheme is used to modulate data on a single transmission layer. The first signal modulation scheme is two-dimensional. The second signal modulation scheme is used to jointly modulate data streams on multiple transmission layers. The second signal modulation scheme is 2*N*-dimensional, where *N* is equal to a quantity of the multiple transmission layers.

In some implementations, the first device is a terminal device and the second device is a network device. Alternatively, the first device is the network device and the second device is the terminal device.

FIG. 11 is a schematic structural diagram of a communication device provided by another embodiment of the disclosure. A communication device 1100 illustrated in FIG. 11 is a second device. The communication device 1100 may include a receiving module 1110 and a modulation/demodulation module. The receiving module 1110 is configured to receive first information sent by a first device. The first information indicates a first scheme. The modulation/demodulation module is configured to perform signal modulation or signal demodulation according to the first scheme. The first scheme is one of multiple schemes for signal modulation or signal demodulation. The multiple schemes are associated with multiple usage conditions, respectively.

In some implementations, the usage condition for the first scheme is associated with one or more of the following information: a moving speed of a terminal device, channel measurement information, CSI feedback-related information, channel energy, channel quality, an operating frequency band, an operating bandwidth, phase noise-related information, a type of a PA, or a capability of the terminal device.

In some implementations, the channel measurement information includes configuration information of a reference signal for channel measurement.

In some implementations, the CSI feedback-related information includes configuration information for CSI feedback.

In some implementations, the phase noise-related information includes configuration information of a PTRS.

In some implementations, the first information includes one or more of: an identifier of the first scheme, or the first scheme.

In some implementations, the communication device further includes a sending module 1120. The sending module 1120 is configured to send second information to the first device. The second information is used by the first device to determine the first scheme.

In some implementations, the second information indicates one or more of: information for determining a portion of or all of the multiple usage conditions, or association relationships between a portion of or all of the multiple usage conditions and a portion of or all of the multiple schemes.

In some implementations, the first scheme includes one or more of: a model-based signal modulation scheme, a signal modulation scheme based on a predefined modulation constellation, or a modulation constellation generated based on a model.

In some implementations, the model-based signal modulation scheme includes one or more of: a model-based first signal modulation scheme, or a model-based second signal modulation scheme. The first signal modulation scheme is used to modulate data on a single transmission layer. The first signal modulation scheme is two-dimensional. The second signal modulation scheme is used to jointly modulate data streams on multiple transmission layers. The second signal modulation scheme is 2*N*-dimensional, where *N* is equal to a quantity of the multiple transmission layers.

In some implementations, the first device is a terminal device and the second device is a network device. Alternatively, the first device is the network device and the second device is the terminal device.

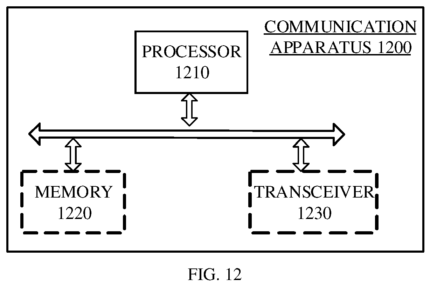

FIG. 12 is a schematic structural diagram of a communication apparatus provided by an embodiment of the disclosure. Dashed lines illustrated in FIG. 12 may mean that a unit or a module is optional. An apparatus 1200 may be used to implement the method in the foregoing method embodiments. The apparatus 1200 may be a chip, a terminal device or a network device.

The apparatus 1200 may include one or more processors 1210. The processor 1210 may support the apparatus 1200 to implement the method in the foregoing method embodiments. The processor 1210 may be a general-purpose processor or a dedicated processor. For example, the processor may be a central processing unit (CPU), or may be other general-purpose processors, a digital signal processor (DSP), an application specific integrated circuit (ASIC), a field programmable gate array (FPGA), or other programmable logic devices, discrete gates or transistor logic devices, discrete hardware components, etc. The general-purpose processor may be a microprocessor, or the processor may be any conventional processor or the like.

The apparatus 1200 may further include one or more memories 1220. The memory 1220 is configured to store programs. The programs may be executed by the processor 1210 to cause the processor 1210 to perform the method in the foregoing method embodiments. The memory 1220 may be independent of the processor 1210, or may be integrated in the processor 1210.

The apparatus 1200 may further include a transceiver 1230. The processor 1210 may communicate with other devices or chips through the transceiver 1230. For example, the processor 1210 may send data to and receive data from other devices or chips through the transceiver 1230.

A computer-readable storage medium is further provided in embodiments of the disclosure. The computer-readable storage medium is configured to store programs. The computer-readable storage medium may be applied to a terminal or a network device provided by embodiments of the disclosure. The programs are operable with a computer to perform the method in each embodiment of the disclosure.

A computer program product is further provided in embodiments of the disclosure. The computer program product includes programs. The computer program product may be applied to the terminal or the network device provided by embodiments of the disclosure. The programs are operable with the computer to perform the method in each embodiment of the disclosure.

A computer program is further provided in embodiments of the disclosure. The computer program may be applied to the terminal or the network device provided by embodiments of the disclosure. The computer program is operable with the computer to perform the method in each embodiment of the disclosure.

It can be understood that, all or part of functions of the communication device in the disclosure may be implemented by using a software function running on hardware, or may be implemented by using an instantiated virtualization function on a platform (such as a cloud platform).

It can be understood that, the terms "system" and "network" in the disclosure may be used interchangeably. In addition, the terms used in the disclosure are merely intended for explaining specific embodiments of the disclosure rather than limiting the disclosure. The terms "first", "second", "third", "fourth", and the like used in the specification, the claims, and the accompanying drawings of the disclosure are used to distinguish different objects rather than describe a particular order. In addition, the terms "include", "comprise", and "have" as well as any variations thereof are intended to cover non-exclusive inclusion.

The "indication" referred to in embodiments of the disclosure may be a direct indication, may be an indirect indication, or may mean that there is an association relationship. For example, *A* indicates *B* may mean that *A* directly indicates *B*, for instance, *B* can be obtained according to *A*; may mean that *A* indirectly indicates *B*, for instance, *A* indicates *C*, and *B* can be obtained according to *C*; or may mean that there is an association relationship between *A* and *B*.

The term "correspondence" in embodiments of the disclosure may mean that there is a direct or indirect correspondence between the two, may mean that there is an association between the two, or may mean a relationship of indicating and indicated or configuring and configured, etc.

The "predefined" or "preconfigured" in embodiments of the disclosure can be implemented by pre-saving a corresponding code or table in a device (for example, including the terminal device and the network device) or in other manners that can be used for indicating related information, and the disclosure is not limited in this regard. For example, the "predefined" may mean defined in a protocol.

The "protocol" in embodiments of the disclosure may refer to a communication standard protocol, which may include, for example, an LTE protocol, an NR protocol, and a protocol applied to a future communication system, and the disclosure is not limited in this regard.

The term "and/or" in embodiments of the disclosure only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

The "include" in embodiments of the disclosure may refer to direct inclusion or indirect inclusion. Optionally, the "include" referred to in embodiments of the disclosure may be replaced with "indicate" or "used to determine". For example, "*A* includes *B*" may be replaced with "*A* indicates *B*", or may be replaced with "*A* is used to determine *B*".

In various embodiments of the disclosure, the magnitude of a sequence number of each of the foregoing processes does not mean an execution order, and an execution order of each process should be determined according to a function and an internal logic thereof, which shall not constitute any limitation on an implementation process of embodiments of the disclosure.

It can be understood that, the systems, apparatuses, and methods disclosed in several embodiments of the disclosure may be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Units illustrated as separated components may or may not be physically separated. Components displayed as units may or may not be physical units, and may reside at one location or may be distributed to multiple network units. Some or all of the units may be selectively adopted according to practical needs to achieve the objectives of the solutions of embodiments.

In addition, various functional units in various embodiments of the disclosure may be integrated into one processing unit, or may be present as a number of physically separated units, or two or more units may be integrated into one unit.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for wireless communication, comprising:
performing, by a first device, signal modulation or signal demodulation according to a first scheme in response to a usage condition for the first scheme being satisfied, wherein the first scheme is one of a plurality of schemes for signal modulation or signal demodulation, and the plurality of schemes are associated with a plurality of usage conditions, respectively.

2. The method of claim 1, wherein the usage condition for the first scheme is associated with one or more of the following information:
a moving speed of a terminal device;
channel measurement information;
channel state information (CSI) feedback-related information;
channel energy;
channel quality;
an operating frequency band;
an operating bandwidth;
phase noise-related information;
a type of a power amplifier (PA); or
a capability of the terminal device.

3. The method of claim 2, wherein the channel measurement information comprises configuration information of a reference signal for channel measurement.

4. The method of claim 2 or 3, wherein the CSI feedback-related information comprises configuration information for CSI feedback.

5. The method of any one of claims 2 to 4, wherein the phase noise-related information comprises configuration information of a phase tracking reference signal (PTRS).

6. The method of any one of claims 1 to 5, further comprising:
sending, by the first device, first information to a second device, wherein the first information indicates the first scheme.

7. The method of claim 6, wherein the first information comprises one or more of:
an identifier of the first scheme; or
the first scheme.

8. The method of any one of claims 1 to 7, wherein before performing, by the first device, signal modulation or signal demodulation according to the first scheme, the method further comprises:
receiving, by the first device, second information sent by a second device, wherein the second information is used by the first device to determine the first scheme.

9. The method of claim 8, wherein the second information indicates one or more of:
information for determining a portion of or all of the plurality of usage conditions; or
association relationships between the portion of or all of the plurality of usage conditions and a portion of or all of the plurality of schemes.

10. The method of any one of claims 1 to 9, wherein the first scheme comprises one or more of:
a model-based signal modulation scheme;
a signal modulation scheme based on a predefined modulation constellation; or
a modulation constellation generated based on a model.

11. The method of claim 10, wherein the model-based signal modulation scheme comprises one or more of:
a model-based first signal modulation scheme, wherein the first signal modulation scheme is used to modulate data on a single transmission layer, and the first signal modulation scheme is two-dimensional; or
a model-based second signal modulation scheme, wherein the second signal modulation scheme is used to jointly modulate data streams on a plurality of transmission layers, the second signal modulation scheme is 2*N*-dimensional, and *N* is equal to a quantity of the plurality of transmission layers.

12. The method of any one of claims 1 to 11, wherein:
the first device is a terminal device, and the second device is a network device; or
the first device is the network device, and the second device is the terminal device.

13. A method for wireless communication, comprising:
receiving, by a first device, first information sent by a second device, wherein the first information indicates a first scheme; and
performing, by the first device, signal modulation or signal demodulation according to the first scheme,
wherein the first scheme is one of a plurality of schemes for signal modulation or signal demodulation, and the plurality of schemes are associated with a plurality of usage conditions, respectively.

14. The method of claim 13, wherein a usage condition for the first scheme is associated with one or more of the following information:
a moving speed of a terminal device;
channel measurement information;
channel state information (CSI) feedback-related information;
channel energy;
channel quality;
an operating frequency band;
an operating bandwidth;
phase noise-related information;
a type of a power amplifier (PA); or
a capability of the terminal device.

15. The method of claim 14, wherein the channel measurement information comprises configuration information of a reference signal for channel measurement.

16. The method of claim 14 or 15, wherein the CSI feedback-related information comprises configuration information for CSI feedback.

17. The method of any one of claims 14 to 16, wherein the phase noise-related information comprises configuration information of a phase tracking reference signal (PTRS).

18. The method of any one of claims 13 to 17, wherein the first information comprises one or more of:
an identifier of the first scheme; or
the first scheme.

19. The method of any one of claims 13 to 18, wherein before receiving, by the first device, the first information sent by the second device, the method further comprises:
sending, by the first device, second information to the second device, wherein the second information is used by the second device to determine the first scheme.

20. The method of claim 19, wherein the second information indicates one or more of:
information for determining a portion of or all of the plurality of usage conditions; or
association relationships between the portion of or all of the plurality of usage conditions and a portion of or all of the plurality of schemes.

21. The method of any one of claims 13 to 20, wherein the first scheme comprises one or more of:
a model-based signal modulation scheme;
a signal modulation scheme based on a predefined modulation constellation; or
a modulation constellation generated based on a model.

22. The method of claim 21, wherein the model-based signal modulation scheme comprises one or more of:
a model-based first signal modulation scheme, wherein the first signal modulation scheme is used to modulate data on a single transmission layer, and the first signal modulation scheme is two-dimensional; or
a model-based second signal modulation scheme, wherein the second signal modulation scheme is used to jointly modulate data streams on a plurality of transmission layers, the second signal modulation scheme is 2*N*-dimensional, and *N* is equal to a quantity of the plurality of transmission layers.

23. The method of any one of claims 13 to 22, wherein:
the first device is a terminal device, and the second device is a network device; or
the first device is the network device, and the second device is the terminal device.

24. A communication device, being a first device, comprising:
a modulation/demodulation module configured to perform signal modulation or signal demodulation according to a first scheme in response to a usage condition for the first scheme being satisfied, wherein the first scheme is one of a plurality of schemes for signal modulation or signal demodulation, and the plurality of schemes are associated with a plurality of usage conditions, respectively.

25. The communication device of claim 24, wherein the usage condition for the first scheme is associated with one or more of the following information:
a moving speed of a terminal device;
channel measurement information;
channel state information (CSI) feedback-related information;
channel energy;
channel quality;
an operating frequency band;
an operating bandwidth;
phase noise-related information;
a type of a power amplifier (PA); or
a capability of the terminal device.

26. The communication device of claim 25, wherein the channel measurement information comprises configuration information of a reference signal for channel measurement.

27. The communication device of claim 25 or 26, wherein the CSI feedback-related information comprises configuration information for CSI feedback.

28. The communication device of any one of claims 25 to 27, wherein the phase noise-related information comprises configuration information of a phase tracking reference signal (PTRS).

29. The communication device of any one of claims 24 to 28, further comprising:
a sending module configured to send first information to a second device, wherein the first information indicates the first scheme.

30. The communication device of claim 29, wherein the first information comprises one or more of:
an identifier of the first scheme; or
the first scheme.

31. The communication device of any one of claims 24 to 30, further comprising:
a receiving module configured to receive second information sent by a second device, wherein the second information is used by the first device to determine the first scheme.

32. The communication device of claim 31, wherein the second information indicates one or more of:
information for determining a portion of or all of the plurality of usage conditions; or
association relationships between the portion of or all of the plurality of usage conditions and a portion of or all of the plurality of schemes.

33. The communication device of any one of claims 24 to 32, wherein the first scheme comprises one or more of:
a model-based signal modulation scheme;
a signal modulation scheme based on a predefined modulation constellation; or
a modulation constellation generated based on a model.

34. The communication device of claim 33, wherein the model-based signal modulation scheme comprises one or more of:
a model-based first signal modulation scheme, wherein the first signal modulation scheme is used to modulate data on a single transmission layer, and the first signal modulation scheme is two-dimensional; or
a model-based second signal modulation scheme, wherein the second signal modulation scheme is used to jointly modulate data streams on a plurality of transmission layers, the second signal modulation scheme is 2*N*-dimensional, and *N* is equal to a quantity of the plurality of transmission layers.

35. The communication device of any one of claims 24 to 34, wherein:
the first device is a terminal device, and the second device is a network device; or
the first device is the network device, and the second device is the terminal device.

36. A communication device, being a second device, comprising:
a receiving module configured to receive first information sent by a first device, wherein the first information indicates a first scheme; and
a modulation/demodulation module configured to perform signal modulation or signal demodulation according to the first scheme,
wherein the first scheme is one of a plurality of schemes for signal modulation or signal demodulation, and the plurality of schemes are associated with a plurality of usage conditions, respectively.

37. The communication device of claim 36, wherein a usage condition for the first scheme is associated with one or more of the following information:
a moving speed of a terminal device;
channel measurement information;
channel state information (CSI) feedback-related information;
channel energy;
channel quality;
an operating frequency band;
an operating bandwidth;
phase noise-related information;
a type of a power amplifier (PA); or
a capability of the terminal device.

38. The communication device of claim 37, wherein the channel measurement information comprises configuration information of a reference signal for channel measurement.

39. The communication device of claim 37 or 38, wherein the CSI feedback-related information comprises configuration information for CSI feedback.

40. The communication device of any one of claims 37 to 39, wherein the phase noise-related information comprises configuration information of a phase tracking reference signal (PTRS).

41. The communication device of any one of claims 36 to 40, wherein the first information comprises one or more of:
an identifier of the first scheme; or
the first scheme.

42. The communication device of any one of claims 36 to 41, further comprising:
a sending module configured to send second information to the first device, wherein the second information is used by the first device to determine the first scheme.

43. The communication device of claim 42, wherein the second information indicates one or more of:
information for determining a portion of or all of the plurality of usage conditions; or
association relationships between the portion of or all of the plurality of usage conditions and a portion of or all of the plurality of schemes.

44. The communication device of any one of claims 36 to 43, wherein the first scheme comprises one or more of:
a model-based signal modulation scheme;
a signal modulation scheme based on a predefined modulation constellation; or
a modulation constellation generated based on a model.

45. The communication device of claim 44, wherein the model-based signal modulation scheme comprises one or more of the following:
a model-based first signal modulation scheme, wherein the first signal modulation scheme is used to modulate data on a single transmission layer, and the first signal modulation scheme is two-dimensional; or
a model-based second signal modulation scheme, wherein the second signal modulation scheme is used to jointly modulate data streams on a plurality of transmission layers, the second signal modulation scheme is 2*N*-dimensional, and *N* is equal to a quantity of the plurality of transmission layers.

46. The communication device of any one of claims 36 to 45, wherein:
the first device is a terminal device, and the second device is a network device; or
the first device is the network device, and the second device is the terminal device.

47. A communication device being a first device, wherein the communication device comprises a memory and a processor, the memory is configured to store programs, and the processor is configured to invoke the programs stored in the memory and control a transceiver to receive or send signals, to cause the first device to perform the method of any one of claims 1 to 12.

48. A communication device being a second device, wherein the communication device comprises a transceiver, a memory, and a processor, the memory is configured to store programs, and the processor is configured to invoke the programs stored in the memory and control the transceiver to receive or send signals, to cause the second device to perform the method of any one of claims 13 to 23.

49. An apparatus comprising a processor, the processor is configured to invoke programs stored in a memory, to cause the apparatus to perform the method of any one of claims 1 to 12 or 13 to 23.

50. A chip comprising a processor, the processor is configured to invoke programs stored in a memory, to cause a device equipped with the chip to perform the method of any one of claims 1 to 12 or 13 to 23.

51. A computer-readable storage medium configured to store programs, wherein the programs are operable with a computer to perform the method of any one of claims 1 to 12 or 13 to 23.

52. A computer program product comprising programs, wherein the programs are operable with a computer to perform the method of any one of claims 1 to 12 or 13 to 23.

53. A computer program being operable with a computer to perform the method of any one of claims 1 to 12 or 13 to 23.
